Europäisches Patentamt

(19) European Patent Office

Office européen des brevets

(11) Publication number: **0 173 546**
**B1**

## EUROPEAN PATENT SPECIFICATION

(45) Date of publication of patent specification: **31.10.90**

(21) Application number: **85305957.4**

(22) Date of filing: **21.08.85**

(51) Int. Cl.[5]: **C 08 L 9/02, C 08 L 7/00,**
**C 08 L 9/00, C 08 L 23/16 //**
**(C08L9/02, 7:00, 9:00, 23:16,**
**25:04, 65:00),(C08L7/00, 9:02,**
**25:04, 65:00),(C08L9/00, 9:02,**
**25:04, 65:00),(C08L23/16,**
**9:02, 25:04, 65:00)**

(54) Oil-resistant rubber composition.

(30) Priority: **21.08.84 JP 173772/84**

(43) Date of publication of application:
**05.03.86 Bulletin 86/10**

(45) Publication of the grant of the patent:
**31.10.90 Bulletin 90/44**

(84) Designated Contracting States:
**DE GB**

(56) References cited:
**GB-A- 672 992**
**US-A-3 179 718**
**US-A-3 400 086**
**US-A-3 963 665**

**PATENT ABSTRACTS OF JAPAN, vol. 6, no. 180,**
**(C125)(1058), September 14, 1982**

**PATENT ABSTRACTS OF JAPAN, vol. 5, no. 184,**
**(C-80)(856), November 21, 1981**

**GUMMI, ASBEST, KUNSTSTOFFE, vol. 30, no. 8,**
**1977, Stuttgart (DE); J.M.MITCHELL:**
**"Verschnitte aus Nitrilkautschuk und EPDM", pp.**
**498-504**

(73) Proprietor: **JAPAN SYNTHETIC RUBBER CO.,**
**LTD.**
**11-24, Tsukiji-2-chome Chuo-ku**
**Tokyo 104 (JP)**

(72) Inventor: **Mori, Yoji**
**8-1, Mitakidai-2-chome**
**Yokkaichi-shi (JP)**
Inventor: **Kawamura, Yoshiaki**
**4-31, Mitakidai-1-chome**
**Yokkaichi-shi (JP)**
Inventor: **Matsumoto, Hironori**
**23-20, Hagigaokacho**
**Yokkaichi-shi (JP)**
Inventor: **Takemura, Yasuhiko**
**18-16, Mitakidai-4-chome**
**Yokkaichi-shi (JP)**

(74) Representative: **Tubby, David George et al**
**MARKS & CLERK 57-60 Lincoln's Inn Fields**
**London WC2A 3LS (GB)**

(56) References cited:
**PATENTS ABSTRACTS OF JAPAN, Vol. 9, no.**
**104, (C-279)(1827), May 8, 1985**

EP 0 173 546 B1

Courier Press, Leamington Spa, England.

# EP 0 173 546 B1

**Description**

This invention relates to an oil-resistant rubber composition having excellent mechanical properties.

Blending at least two different elastomers to obtain a blend having novel properties which cannot be obtained from the individual elastomers has long been a common practice. This blending method is used not only to impart new properties but also to enhance processability and to reduce material cost. Typical examples of such elastomer blends are a blend composition of a styrene-butadiene rubber (herein referred to as SBR) and a polybutadiene rubber (herein referred to as BR), which is used as a material for tyre treads, and a blend composition of an SBR and an ethylene-propylene-non-conjugated diene rubber (herein referred to as EPDM), which is used as a material for the side walls of tyres.

However, blending an acrylonitrile-butadiene rubber (herein referred as NBR) with a low polarity rubber or blending an EPDM with a diene rubber generally results in a blend having inferior mechanical properties to those of the individual compoennts before blending.

In order to overcome this drawback in blending a diene rubber with an EPDM, R. T. Morrissey has proposed a method of halogenating an EPDM [Rubber Chem. Technol., *44*, 1025 (1971)] and R. P. Mastromatteo *et al.* have proposed a method of using, as the vulcanizing accelerator, a dialkyldithiocarbamic acid salt having long chain alkyl groups or a tetraalkylthiuram disulphide [Rubber Chem. Technol., *44*, 1065 (1971)]. Also, Hashimoto *et al.* have proposed a method wherein an EPDM is reacted with sulphur and a vulcanizing accelerator to form an EPDM having pendant sulphur and then the EPDM is blended with another rubber [Journal of the Society of Rubber Industry, Japan, *49*, 236, 246 (1976)].

These methods are fairly effective when the diene rubber is a natural rubber, an SBR or a BR, since these have a low polarity. However, when the diene rubber is an NBR, which has a high polarity, the effects achieved by these methods are small and the rubber blends have greatly inferior mechanical properties to those of the individual components before blending; they are therefore of little practical use.

We have now found that an oil-resistant rubber composition having good mechanical properties can be produced by blending an NBR having a large $\Delta Tg$ with a rubber having a low polarity. We have also found that addition of a styrene polymer or of a polyalkenamer to this composition results in a further improvement in mechanical properties such as tear strength, resistance to crack growth and the like.

According to this invention, there is provided an oil-resistant rubber composition comprising: (A) from 90 to 10 parts by weight of an unsaturated nitrile-conjugated diene rubber having a $\Delta Tg$ of at least 58°C and an average bound nitrile content of from 15 to 50% by weight; (B) from 10 to 90 parts by weight of at least one rubber which is an ethylene-propylene copolymer rubber, a natural rubber or a polyisoprene; and (C) from 0 to 50 parts by weight, per 100 parts by weight of the total of (A) and (B), of at least one styrene polymer and/or polyalkenamer; component A (i) has been prepared by (a) polymerisation of nitrile and diene components using stepwise addition of successive charges or (b) blending of two or more latices of nitrile-conjugated diene rubber of differing compositions, or (c) mixing of solid nitrile-conjugated diene rubbers of different compositions, and (ii) has been selected for use by assessing the nitrile content and the temperature range $\Delta Tg$ over which specific heat changes rapidly wtih temperature, as compared with temperatures outside of the range where it is approximately constant, and utilising those nitrile-conjugated diene rubbers where $\Delta Tg$ is 58°C or more and average bound nitrile content is 15% to 50% by weight.

$\Delta Tg$ is determined as follows. The specific heat of a material is measured by differential scanning calorimetry (DSC) whilst progressively increasing the temperature from a relatively low temperature. Within a particular temperature range, a rapid change of specific heat with temperature is observed; outside this range, specific heat is approximately constant regardless of temperature. The point at which this rapid change begins is here referred to as "Point A" and the point at which it ends is "Point B". The temperature and specific heat at Point A are $T_A$ and $C_A$, respectively; the temperature and specific heat at Point B are $T_B$ and $C_B$, respectively, $\Delta Tg = T_B - T_A$.

The point at which the value of specific heat is $(C_A + C_B)/2$ is referred to as Point C, and the temperature at Point C is the glass transition temperature, Tg.

The unsaturated nitrile-conjugated diene rubber (A) used in this invention is a copolymer of (1) an unsaturated nitrile, such as acrylonitrile or methacrylonitrile, and (2) a conjugated diene, such as butadiene or isoprene. As the rubber (A), an acrylonitrile-butadiene rubber (NBR) is particularly preferred.

The unsaturated nitrile-conjugated diene rubber (A) used in this invention has a $\Delta Tg$ of at least 58°C, preferably from 60°C to 90°C. If the $\Delta Tg$ is smaller than 58°C, the compatibility of the rubber (A) with other rubbers is inferior, and, as a consequence, the resulting rubber blend has greatly inferior mechanical strength.

Also, the unsaturated nitrile-conjugated diene rubber preferably has a probability, as calculated from specific heat, of containing components having a Tg of −73°C or less of at least 5%, more preferably at least 8%. If the specific heat at a temperature of −73°C is $C_x$, then the probability, as calculated from specific heat, of the rubber containing components having a Tg of −73°C or less is $[(C_x - C_A)/(C_B - C_A)] \times 100$. The preferred upper limit of this probability is 50% in view of the oil resistance required. Owing to the presence of components having a Tg of −73°C or less, the rubber (A) can have an improved compatibility with rubbers having a low polarity. When the rubber (A) contains components having a Tg of −73°C or less with a probability, as calculated from specific heat, of at least 5%, the rubber (A) has more improved mechanical

2

properties such as tensile strength, elongation, flex resistance, etc.

The unsaturated nitrile-conjugated diene rubber (A) preferably has a Tg of from −63° to −10°C. Further, the unsaturated nitrile-conjugated diene rubber (A) has an average bound nitrile content of from 15 to 50% by weight, preferably from 20 to 45% by weight in order to achieve optimum oil resistance and cold resistance.

The calculation of Tg and ΔTg in this invention is explained with reference to the accompanying drawings. In the drawings:

Figure 1 is a graph showing how Tg and ΔTg may be determined;

Figure 2 is a graph for determining the probability of the presence of components having a Tg of −73°C or less in the unsaturated nitrile-conjugated diene rubber according to this invention;

Figure 3(a) is a graph showing a plot of specific heat against temperature from which may be calculated the ΔTg of a commercially available low-nitrile NBR;

Figure 3(b) is a graph showing a plot of specific heat against temperature from which may be calculated the ΔTg of a commercially available high nitrile NBR;

Figure 4 is a graph showing a plot of specific heat against temperature from which may be calculated the ΔTg of the NBR-1 of Example 1;

Figure 5 is a graph showing a plot of specific heat against temperature from which may be calculated the ΔTg of the NBR-2 of Example 12;

Figure 6 is a graph showing a plot of specific heat against temperature from which may be calculated the ΔTg of the NBR-3 of Example 13; and

Figure 7 is a graph showing a plot of specific heat against temperature from which may be calculated the ΔTg of a 40:60 by weight mixture of NBR-A and NBR-B (i.e. NBR-AB) in Examples 14 and 15.

The Tg is determined according to the following procedure:

(1) Using a low temperature DSC (a differential scanning calorimeter manufactured by Rigaku Denki), the change in the specific heat of a sample with temperature is measured at a temperature elevation rate of 20°C/minute.

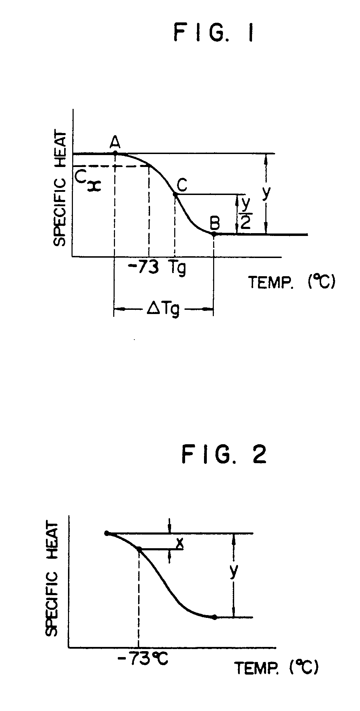

(2) The temperature of the point C (midway between A and B) as determined from the curve obtained in the manner shown in Figure 1 is the value of Tg.

ΔTg in this invention is the difference between the temperature at point A (i.e. the point at which specific heat begins to change with increasing temperature) and the temperature at point B (i.e. the point at which the variation of specific heat with increasing temperature stops) in Figure 1.

The probability of the presence of components having a Tg of −73°C or less according to this invention is the value (x/y)×100 obtained in the manner shown in Figure 2.

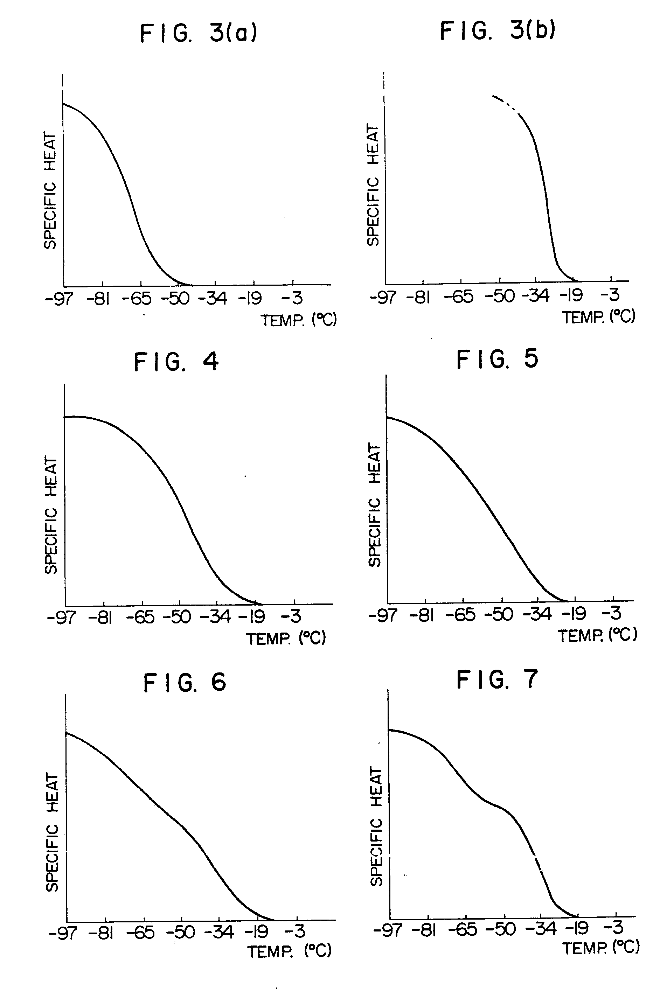

A commercially available low nitrile NBR (JSR N250S produced by Japan Synthetic Rubber Co., Ltd.) and a commercially available high nitrile NBR (JSR N220S produced by Japan Synthetic Rubber Co., Ltd.) were subjected to measurement of their ΔTg values in accordance with the procedure mentioned above, which showed that the ΔTg of the low nitrile NBR was 53°C and that of the high nitrile NBR was 35°C. As can also be seen from Figure 3(a) for low nitrile NBR and Figure 3(b) for high nitrile NBR, low nitrile NBR's have, in general, a larger ΔTg than high nitrile NBR's.

The method of producing the unsaturated nitrile-conjugated diene rubber (A) used in this invention is not critical. The rubber (A) can be produced simply by mixing unsaturated nitrile-conjugated diene rubbers of different Tg values. Alteratively, it can be obtained by employing, at the time of polymerization, a special technique which consists of carefully controlled addition of portions of the monomer mixture in separate stages to the polymerization reactor (the proportions of monomers preferably varying from one portion to the next) so as to produce *in situ* a polymer having components of differing Tg values. The polymerization method *per se* employed in the production of the rubber (A) is not critical, and any conventional polymerization technique, such as emulsion polymerization, suspension polymerization, solution polymerization or bulk polymerization, can be employed. Of these, emulsion polymerization is more common.

The unsaturated nitrile-conjugated diene rubber (A) having a large ΔTg can be produced by, for example, adding the conjugated diene and the unsaturated nitrile, which are the monomers to be copolymerized, and a molecular weight regulator to the polymerization system in portions at the time of polymerization. The timing of these additions and the amount of each portion added may be varied depending upon the desired Tg and ΔTg of the unsaturated nitrile-conjugated diene rubber.

The method employed to mix unsaturated nitrile-conjugated diene rubbers of different Tg values is not critical. At least two different unsaturated nitrile-conjugated diene rubbers may be mixed in the form of a latex or a solid. Alternatively, at least two different unsaturated nitrile-conjugated diene rubbers may be kneaded together in the solid form with other rubbers, carbon black, a plasticizer, a vulcanizing agent, etc.

The ethylene-propylene copolymer rubber which is the (B) component of the composition of the present invention may be an ethylene-propylene copolymer rubber or an ethylene-propylene-non-conjugated diene copolymer rubber in which the non-conjugated diene is one or more of ethylidenenorbornene, cyclopentadiene, 1,4-hexadiene, methylenenorbornene and 4,7,8,9-tetrahydroindene. An ethylene-propylene-non-conjugated diene copolymer rubber is the preferred (B) component.

The styrene polymer which is one of the optional (C) components of the composition of the present invention may be a polystyrene, an acrylonitrile-styrene resin, an acrylonitrile-butadiene-styrene resin, an acrylonitrile-ethylene-propylene copolymer rubber-styrene resin (herein referred to as AES resin), a styrene-butadiene-styrene block copolymer, a styrene-isoprene-styrene block copolymer or a hydrogenated product thereof. Of these, the AES resin, the styrene-butadiene-styrene block copolymer and hydrogenated products thereof are particularly preferred.

The polyalkenamer which is the other optional (C) component of the composition of the present invention may be a *trans*-1,5-polypentenamer, a *trans*-polyoctenamer, or the like. Of these, the *trans*-polyoctenamer is particularly preferred.

The blending ratio of the (A) component to the (B) component is from 90:10 to 10:90, preferably from 80:20 to 20:80, by weight. When the (B) component is an ethylene-propylene copolymer rubber and its content is less than 10 parts by weight, the composition of this invention has poor weather resistance; on the other hand, when its content exceeds 90 parts by weight, the resulting composition has inferior oil resistance. When the (B) component is a natural rubber or a polyisoprene rubber and its content is less than 10 parts by weight, the composition of this invention has poor mechanical strengths such as tensile strength, elongation, etc; on the other hand, when its content exceeds 90 parts by weight, the resulting composition has inferior oil resistance.

The amount of the (C) component, namely, the styrene polymer and/or the polyalkenamer used is from 0 to 50 parts by weight, preferably from 0 to 20 parts by weight, and more preferably from 5 to 20 parts by weight, per 100 parts by weight of the total of the (A) and (B) components. Even in the absence of the (C) component, the composition of this invention has sufficiently enhanced mechanical strengths; however, the addition of the (C) component still further improves the mechanical strengths. However, if the amount of the (C) component added exceeds 50 parts by weight, the composition of this invention has an increased hardness and a reduced rubber elasticity.

References to the composition of this invention include compositions obtained by adding conventional rubber compounding ingredients (such as carbon black, sulphur, a plasticizer, a process oil, a vulcanizing accelerator and the like) to the (A), (B) and (C) components and kneading the resulting mixture by a conventional kneader (such as a roll, a Banbury mixer or the like), and also includes vulcanized and shaped products of such compositions.

The physical properties of the composition of this invention have been evaluated based mainly on JIS (Japanese Industrial Standard) K 6301. The results show that the composition of this invention has excellent mechanical properties and processability.

The rubber composition of this invention can be used in various industrial products such as hoses, packings, gaskets, oil seals, belts, boots and the like, which utilize its excellent mechanical strengths.

Further, the composition of this invention may be blended with polyethylene, polypropylene, polyvinyl chloride or the like, followed by, if necessary, dynamic crosslinking, in order to use it as a thermoplastic elastomer in the production of blow-moulded articles, etc.

The invention is further illustrated by the following Examples.

Examples 1 to 6

In a glass autoclave were placed 1,500 g of water, 36 g of potassium rosinate, 51.1 g of butadiene (herein referred to as BD), 5.7 g of acrylonitrile (herein referred to as AN) and 0.11 g of t-dodecyl mercaptan (herein referred to as TDM). This mixture of water, potassium rosinate, BD, AN and TDM is hereinafter referred to as "the initial charge". Polymerization was initiated at 5°C by adding *p*-menthane hydroperoxide-ferrous sulphate, as polymerization initiator. After the polymerization had continued for 2 hours, 7.6 g of AN, 26.5 g of BD and 0.14 g of TDM were further added (this addition is referred to as "the first further addition"). The resulting mixture was then subjected to polymerization for a further 2 hours. Thereafter, a second further addition was made with the recipe shown in Table 5, and polymerization was conducted for 2 hours. Subsequently, a third further addition was made as shown in Table 5, and polymerization was conducted for 2 hours. In such a manner, the further addition and polymerization was repeated a total of seven times, each time using the recipes shown in Table 5. To the resulting latex was added octylated diphenylamine and then the unreacted monomers were removed using heated steam. The resulting latex was poured into an aqueous solution of aluminium sulphate to precipitate a rubber, which was then water-washed and dried.

The Tg and ΔTg of the NBR thus obtained were measured in accordance with the procedure mentioned previously. The NBR (hereinunder referred to as NBR-1) had a Tg of −47°C and, as determined from Figure 4, the ΔTg was 71°C. NBR-1 contained components having a Tg of −73°C or less in probability of 8%, as determined from specific heat. Also, the average bound nitrile content of NBR-1, as measured using a Coleman nitrogen analyser, was 35% by weight.

NBR-1 was kneaded with the compounding recipe shown in Table 1, and the resulting mixture was vulcanized for 20 minutes at 160°C, after which the vulcanized compositions obtained were evaluated for their physical properties. The results are shown in Table 8.

Examples 7 to 11

NBR-1, obtained as described in Example 1, was mixed with the polymers and compounding ingredients, except the vulcanizing agent, of the compounding recipe shown in Table 2 in a Banbury mixer;

the resulting mixture was removed and placed on a roll; and the vulcanizing agent was added thereto on the roll. The temperature of the compound as removed from the Banbury mixer was 175°C. The rubber blend thus obtained was vulcanized for 20 minutes at 160°C. The physical properties of the vulcanized product were evaluated, and the results are shown in Table 9.

Example 12

Polymerization was conducted under the same conditions as in Examples 1 to 6 with the polymerization recipe shown in Table 6. The rubber obtained is referred to as NBR-2. NBR-2 had a Tg of −53°C and, as determined from Figure 5, the ΔTg was 72°C. The probability of the presence of components having a Tg of −73°C or less, as determined from specific heat, was 18%. NBR-2 had an average bound nitrile content of 32% by weight. Using NBR-2, a rubber composition was prepared with the compounding recipe shown in Table 3 and the physical properties thereof were measured. The results are shown in Table 10.

Example 13

Polymerization was conducted under the same conditions as in Examples 1 to 6 with the polymerization recipe shown in Table 7. The rubber obtained is referred to as NBR-3. NBR-3 had a Tg of −49°C and, as determined from Figure 6, the ΔTg was 83°C. NBR-3 contained a large amount of components having a low Tg value; the probability of the presence of components having a Tg of −73°C or less, as determined from specific heat, was as large as about 20%. These points are characteristic. NBR-3 had an average bound nitrile content of 33% by weight.

Using NBR-3, a rubber composition was prepared with the compounding recipe shown in Table 3 and the physical properties thereof were measured. The results obtained are shown in Table 10.

Examples 14 and 15

Under the same conditions as in Examples 1 to 6, 160 g of AN, 840 g of BD and 2.2 g of TDM were polymerized. When the conversion reached 70%, the polymerization was terminated. The latex formed is hereinafter referred to as "latex A". Latex A was coagulated and dried to obtain a solid rubber, which is hereinafter referred to as NBR-A. NBR-A had a Tg of −64°C and an average bound nitrile content of 21% by weight.

Separately, under the same conditions as in Example 1, 400 g of AN, 600 g of BD and 3.3 g of TDM were polymerized. When the conversion reached 70%, the polymerization was terminated. The latex formed is hereinafter referred to as "latex B". Latex B was coagulated and dried to obtain a solid rubber, which is hereinafter referred to as NBR-B. NBR-B had a Tg of −34°C and an average bound nitrile content of 40% by weight.

40 parts by weight of latex A were mixed with 60 parts by weight of Latex B, and the resulting mixture was coagulated to obtain a solid rubber, which is hereinafter referred to as NBR-AB. NBR-AB had a Tg of 77°C as determined from Figure 7. The probability of the presence of components having a Tg of −73°C or less, as determined from specific heat, was 14%. NBR-AB had an average bound nitrile content of 32% by weight.

Rubber compositions were prepared with the compounding recipes shown in Table 3 (in Example 14, the weight ratio of NBR-AB:EPDM was 50:50 and, in Example 15, the weight ratio of NBR-A:NBR-B:EPDM was 20:30:50), and their physical properties were measured. The results obtained are shown in Table 10.

Comparative Examples 1 to 3

Vulcanized rubber compositions were prepared by kneading in accordance with the compounding recipes shown in Table 4 and then vulcanizing the resulting mixtures for 20 minutes at 160°C. The physical properties of the resulting compositions were measured. The results obtained are shown in Table 11.

EP 0 173 546 B1

TABLE 1

Compounding recipes

Unit: parts by weight

|  | Example 1 | Example 2 | Example 3 | Example 4 | Example 5 | Example 6 |
|---|---|---|---|---|---|---|
| NBR-1 | 80 | 60 | 50 | 40 | 20 | 50 |
| JSR EP35[1] | 20 | 40 | 50 | 60 | 80 | |
| JSR IR2200[2] | | | | | | 50 |
| Zinc oxide | 5 | 5 | 5 | 5 | 5 | 5 |
| Stearic acid | 1 | 1 | 1 | 1 | 1 | 1 |
| FEF Carbon | 40 | 40 | 40 | 40 | 40 | 40 |
| Dioctyl adipate | 15 | 15 | 15 | 15 | 15 | 15 |
| Diphenylguanidine | 3 | 3 | 3 | 3 | 3 | 3 |
| Sulphur | 1.5 | 1.5 | 1.5 | 1.5 | 1.5 | 1.5 |

Note:
[1]: EPDM Produced by Japan Synthetic Rubber Co., Ltd.
[2]: Polyisoprene rubber produced by Japan Synthetic Rubber Co., Ltd.

TABLE 2

Unit: parts by weight

|  | Example 7 | Example 8 | Example 9 | Example 10 | Example 11 |
|---|---|---|---|---|---|
| NBR-1 | 50 | 50 | 50 | 50 | 50 |
| JSR EP35 | 50 | 50 | 50 | 50 | |
| JSR IR2200 | | | | | 50 |
| JSR AES110[1] | 5 | 10 | | | |
| JSR TR2000[2] | | | 10 | | 10 |
| Vustenamer 8012[3] | | | | 10 | |
| Zinc oxide | 5 | 5 | 5 | 5 | 5 |
| Stearic acid | 1 | 1 | 1 | 1 | 1 |
| FEF Carbon | 40 | 40 | 40 | 40 | 40 |
| Dioctyl adipate | 15 | 15 | 15 | 15 | 15 |
| Diphenylguanidine | 3 | 3 | 3 | 3 | 3 |
| Sulphur | 1.5 | 1.5 | 1.5 | 1.5 | 1.5 |

Note:
[1]: AES Resin produced by Japan Synthetic Rubber Co., Ltd.
[2]: Styrene-butadiene-styrene block copolymer produced by Japan Synthetic Rubber Co., Ltd.
[3]: Trans-polyoctenamer produced by Bunawerke Hüls GmbH (West Germany).

6

# EP 0 173 546 B1

TABLE 3

<div align="right">Unit: parts by weight</div>

| | Example 12 | Example 13 | Example 14 | Example 15 |
|---|---|---|---|---|
| NBR-2 | 50 | | | |
| NBR-3 | | 50 | | |
| NBR-A | | | | 20 |
| NBR-B | | | | 30 |
| NBR-AB | | | 50 | |
| JSR EP 35 | 50 | 50 | 50 | 50 |
| Zinc oxide | 5 | 5 | 5 | 5 |
| Stearic acid | 1 | 1 | 1 | 1 |
| FEF Carbon | 40 | 40 | 40 | 40 |
| Dioctyl adipate | 15 | 15 | 15 | 15 |
| Diphenylguanidine | 3 | 3 | 3 | 3 |
| Sulphur | 1.5 | 1.5 | 1.5 | 1.5 |

TABLE 4

<div align="right">Unit: parts by weight</div>

| | Comparative Example 1 | Comparative Example 2 | Comparative Example 3 |
|---|---|---|---|
| JSR N230S[1] | 50 | | 50 |
| JSR N240S[2] | | 50 | |
| JSR EP35 | 50 | 50 | |
| JSR IR2200 | | | 50 |
| Zinc oxide | 5 | 5 | 5 |
| Stearic acid | 1 | 1 | 1 |
| FEF Carbon | 40 | 40 | 40 |
| Dioctyl adipate | 15 | 15 | 15 |
| Diphenylguanidine | 3 | 3 | 3 |
| Sulphur | 1.5 | 1.5 | 1.5 |

Note:
  [1]: NBR Produced by Japan Synthetic Rubber Co., Ltd.
     Tg: $-42°C$, $\Delta$Tg: 38°C,
     average bound nitrile content: 35% by weight
  [2]: NBR Produced by Japan Synthetic Rubber Co., Ltd.
     Tg: $-56°C$, $\Delta$Tg: 47°C,
     average bound nitrile content: 26% by weight.

<div align="center">7</div>

TABLE 5
Polymerization recipe of NBR-1

Unit: g

|  | AN | BD | TDM |
|---|---|---|---|
| Amount of initial charge | 5.7 | 51.1 | 0.11 |
| Amount cf 1st further addition | 7.6 | 26.5 | 0.14 |
| Amount of 2nd further addition | 22.3 | 79.9 | 0.31 |
| Amount of 3rd further addition | 26.9 | 64.0 | 0.34 |
| Amount of 4th further addition | 48.5 | 99.2 | 0.56 |
| Amount of 5th further addition | 53.2 | 83.2 | 0.60 |
| Amount of 6th further addition | 81.0 | 112.2 | 0.89 |
| Amount of 7th further addition | 87.0 | 151.6 | 0.93 |

TABLE 6
Polymerization recipe of NBR-2

Unit: g

|  | AN | BD | TDM |
|---|---|---|---|
| Amount of initial charge | 18.3 | 164.6 | 0.35 |
| Amount of 1st further addition | 24.5 | 85.2 | 0.44 |
| Amount of 2nd further addition | 11.0 | 13.4 | 0.16 |
| Amount of 3rd further addition | 14.5 | 34.3 | 0.18 |
| Amount of 4th further addition | 16.9 | 31.9 | 0.20 |
| Amount of 5th further addition | 19.0 | 29.8 | 0.21 |
| Amount of 6th further addition | 118.4 | 174.3 | 1.19 |
| Amount of 7th further addition | 116.7 | 127.2 | 1.25 |

TABLE 7
Polymerization recipe of NBR-3

Unit: g

|  | AN | BD | TDM |
|---|---|---|---|
| Amount of initial charge | 15.6 | 140.6 | 0.30 |
| Amount of 1st further addition | 21.0 | 72.9 | 0.37 |
| Amount of 2nd further addition | 30.1 | 94.8 | 0.42 |
| Amount of 3rd further addition | 37.1 | 88.0 | 0.47 |
| Amount of 4th further addition | 43.3 | 81.6 | 0.52 |
| Amount of 5th further addition | 48.9 | 76.1 | 0.55 |
| Amount of 6th further addition | 53.3 | 71.1 | 0.61 |
| Amount of 7th further addition | 59.1 | 65.3 | 0.64 |

TABLE 8

| Content of polymer (weight ratio) | Example 1 NBR-1/EP35 =80/20 | Example 2 =60/40 | Example 3 =50/50 | Example 4 =40/60 | Example 5 =20/80 | Example 6 NBR-1/IR2200 =50/50 |
|---|---|---|---|---|---|---|
| Tensile strength (kgf/cm$^2$) | 210 | 205 | 200 | 202 | 205 | 216 |
| Elongation (%) | 410 | 400 | 390 | 410 | 400 | 480 |
| Fatigue by elongation[1] (number of repetitions) | $7.0 \times 10^4$ | $6.0 \times 10^4$ | $6.0 \times 10^4$ | $6.0 \times 10^4$ | $5.5 \times 10^4$ | $3.0 \times 10^5$ |
| Resistance to crack growth[2] (crack growth stress) (kgf/cm$^2$) | 21.6 | 20.3 | 19.2 | 19.8 | 18.5 | 23.6 |

[1]: Using a de Mattia flexure tester, a JIS No. 3 dumbbell was subjected to repeated elongation of 0—150% 300 times per min, and the number of repetitions of elongation to reach breakage of the dumbbell was measured.

[2]: A vulcanized rubber sample of 1.5 cm in width, 15 cm in length and 4 mm in thickness was used. A crack of 1 mm in depth was formed on this sample at a place of 7.5 cm from both ends; then the sample was elongated at a drawing speed of 50 mm/min; and a stress when the crack began to grow was measured. This test was conducted as a model test for examining laminar peeling of vulcanized rubbers which appears often in a blend of an NBR with a rubber having a low polarity.

# EP 0 173 546 B1

TABLE 9

|  | Example 7 | Example 8 | Example 9 | Example 10 | Example 11 |
|---|---|---|---|---|---|
| Tensile strength (kgf/cm$^2$) | 216 | 220 | 218 | 217 | 230 |
| Elongation (%) | 380 | 360 | 380 | 370 | 460 |
| Fatigue by elongation (number of repetitions) | $8.0\times10^4$ | $7.0\times10^4$ | $7.5\times10^4$ | $7.0\times10^4$ | $4.0\times10^5$ |
| Resistance to crack growth (crack growth stress) (kgf/cm$^2$) | 23.1 | 25.8 | 26.2 | 25.5 | 29.1 |

TABLE 10

|  | Example 12 | Example 13 | Example 14 | Example 15 |
|---|---|---|---|---|
| Tensile strength (kgf/cm$^2$) | 201 | 205 | 197 | 203 |
| Elongation (%) | 410 | 420 | 420 | 420 |
| Fatigue by elongation (number of repetitions) | $6.0\times10^4$ | $6.5\times10^4$ | $6.0\times10^4$ | $6.0\times10^4$ |
| Resistance to crack growth (crack growth stress) (kgf/cm$^2$) | 18.9 | 19.1 | 19.5 | 18.3 |

TABLE 11

|  | Comparative Example 1 | Comparative Example 2 | Comparative Example 3 |
|---|---|---|---|
| Tensile strength (kgf/cm$^2$) | 130 | 123 | 151 |
| Elongation (%) | 240 | 220 | 380 |
| Fatigue by elongation (number of repetitions) | $2.5\times10^3$ | $2.0\times10^3$ | $9.3\times10^3$ |
| Resistance to crack growth (crack growth stress) (kgf/cm$^2$) | 8.2 | 8.0 | 10.2 |

## Claims

1. An oil-resistant rubber composition comprising:
(A) from 90 to 10 parts by weight of an unsaturated nitrile-conjugated diene rubber; (B) from 10 to 90 parts by weight of at least one rubber which is an ethylene-propylene copolymer rubber, a natural rubber or a polyisoprene; and (C) from 0 to 50 parts by weight, per 100 parts by weight of the total of (A) and (B), of at least one styrene polymer and/or polyalkenamer characterised in that component A (i) has been prepared by (a) polymerisation of nitrile and diene components using stepwise addition of successive charges or (b) blending of two or more latices of nitrile-conjugated diene rubber of differing compositions, or (c) mixing of solid nitrile-conjugated diene rubbers of different compositions, and (ii) has been selected for use by assessing the nitrile content and the temperature range ΔTg over which specific heat changes rapidly with temperature, as compared with temperatures outside of the range where it is approximately constant, and utilising those nitrile-conjugated diene rubbers where ΔTg is 58°C or more and average bound nitrile content is 15% to 50% by weight.

2. A rubber composition according to Claim 1, wherein the unsaturated nitrile-conjugated diene rubber (A) is a copolymer of acrylonitrile or methacrylonitrile and butadiene or isoprene.

3. A rubber composition according to Claim 1 or Claim 2, wherein the ΔTg is from 60° to 90°C.

4. A rubber composition according to any one of Claims 1 to 3, wherein the probability, as calculated

10

from specific heat, of the presence in the unsaturated nitrile-conjugated diene rubber (A) of components having a Tg of −73°C or less is at least 5%.

5. A rubber composition according to any one of Claims 1 to 4, wherein the styrene polymer is a polystyrene, a styrene-butadiene-styrene block copolymer, an acrylonitrile-styrene resin, an acrylonitrile-butadiene-styrene resin, a styrene-butadiene-styrene resin, a styrene-isoprene-styrene block copolymer or a hydrogenated product thereof.

6. A rubber composition according to any one of Claims 1 to 4, wherein the styrene polymer is an acrylonitrile-ethylene-propylene copolymer rubber-styrene resin, a styrene-butadiene-styrene block copolymer or a hydrogenated product thereof.

7. A rubber composition according to any one of Claims 1 to 6, wherein the polyalkenamer is a *trans*-1,5-polypentenamer or a *trans*-polyoctenamer.

8. A rubber composition according to any one of Claims 1 to 7, wherein the amount of the (C) component is from 0 to 20 parts by weight per 100 parts by weight of the total of the (A) and (B) components.

9. A rubber composition according to Claim 8, wherein the amount of the (C) component is from 5 to 20 parts by weight per 100 parts by weight of the total of the (A) and (B) components.

10. A rubber composition according to any one of Claims 1 to 9, wherein the ethylene-propylene copolymer rubber of component (B) is an ethylene-propylene-non-conjugated diene rubber in which the non-conjugated diene is at least one of ethylidenenorbornene, cyclopentadiene, 1,4-hexadiene, methylenenorbornene and 4,7,8,9-tetrahydroindene.

## Patentansprüche

1. Ölresistente Kautschukmischung, die sich zusammensetzt aus
(A) 90 bis 10 Gew.-Teilen eines ungesättigten nitrilkonjugierten Dienkautschuks,
(B) 10 bis 90 Gew.-Teilen zumindest eines Kautschuks in Form eines Naturkautschuks oder eines Polyisoprens, sowie aus
(C) 0 bis 50 Gew.-Teilen pro 100 Teile der Summe von A und B zumindest eines Styrolpolymeren und/oder Polyalkenameren, dadurch gekennzeichnet, dass die Komponente (A)
(i) hergestellt ist (a) durch Polymerisation von Nitril- und Dienkomponenten unter stufenweiser Zuführung aufeinanderfolgender Chargen, oder (b) durch Mischen zweier oder mehrerer Latices von nitrilkonjugiertem Dienkautschuk unterschiedlicher Zusammensetzung und
(ii) zur Verwendung ausgewählt ist durch Bewertung des Nitrilgehalts und des Temperaturbereichs ΔTg innerhalb dessen die spezifische Wärme sich mit der Temperatur rasch ändert im Vergleich zu den Temperaturen ausserhalb des Bereichs in dem sie annähernd konstant ist, und durch die Verwendung von solchen konjugierten Dienkautschuken mit einer ΔTg von 58° oder darüber und mit einem durchschnittlichen Gehalt an gebundenem Nitril von 15 bis 50 Gew.-%.

2. Kautschukmischung nach Anspruch 1, dadurch gekennzeichnet, dass der ungesättigte nitrilkonjugierte Dienkautschuk (A) ein Copolymeres von Acrylnitril oder Methacrylnitril und Butadien oder Isopren ist.

3. Kautschukmischung nach Anspruch 1 oder 2, gekennzeichnet durch eine ΔTg von 60 bis 90°C.

4. Kautschukmischung nach einem der Ansprüche 1 bis 3, wobei die Wahrscheinlichkeit—errechnet aus der spezifischen Wärme—der Anwesenheit von Komponenten mit einer ΔTg von −73°C oder darunter—mindestens 5% beträgt.

5. Kautschukmischung nach einem der Ansprüche 1 bis 4, wobei das Styrolpolymere ein Polystyrol, ein Styrol/Butadien/Styrol-Blockcopolymeres, ein Acrylnitril/Styrolharz, ein Acrylnitril/Butadien/Styrolharz, ein Styrol-Butadien/Styrolharz, ein Styrol/Isopren/Styrol-Blockcopolymeres oder ein Hydrierungsprodukt davon ist.

6. Kautschukmischung nach einem der Ansprüche 1 bis 4, wobei das Styrolpolymere ein Acrylnitril/Ethylen/Propylencopolymer-Kautschuk/Styrolharz, ein Styrol/Butadien/Styrol-Blockcopolymeres oder ein Hydrierungsprodukt davon ist.

7. Kautschukmischung nach einem der Ansprüche 1 bis 6, wobei das Polyalkenamere ein *trans*-1,5-Polypentenameres oder ein *trans*-Polyoctenameres ist.

8. Kautschukmischung nach einem der Ansprüche 1 bis 7, wobei die Menge der (C)-Komponente von 0 bis 20 Gew.-Teile pro 100 Gewichtsteile der Gesamtmenge der (A)- und (B)-Komponenten beträgt.

9. Kautschukmischung nach Anspruch 8, wobei die Menge der (C)-Komponente 5 bis 20 Gew.-Teile pro 100 Gew.-Teile der Gesamtmenge an (A) und (B)-Komponenten beträgt.

10. Kautschukmischung nach einem der Ansprüche 1 bis 9, dadurch gekennzeichnet, dass der Ethylen/Propylen-Copolymerkautschuk der Komponente (B) ein Kautschuk aus Ethylen/Propylen/nichtkonjugiertem Dienkautschuk ist, worin das nichtkonjugierte Dien zumindest eine der Verbindungen Ethylidennorbornen, Cyclopentadien, 1,4-Hexadien, Methylennorbornen und Tetrahydroinden ist.

# EP 0 173 546 B1

## Revendications

1. Composition de caoutchouc résistant à l'huile comprenant:
(A) de 90 à 10 parties en poids d'un caoutchouc diène conjugué nitrile non saturé; (B) de 10 à 90 parties en poids d'au moins un caoutchouc qui est un caoutchouc copolymère d'éthylène-propylène, un caoutchouc naturel ou un polyisoprène; et (C) de 0 à 50 parties en poids, par 100 parties en poids du total de (A) et (B), d'au moins un polymère styrène et/ou un polyalcènamère caractérisée en ce que le composant A (i) a été préparé par (a) polymérisation de composants diènes et nitriles en employant une addition graduelle de charges successives ou (b) mélange de deux ou davantage réseaux de caoutchouc diène conjugué nitrile de différentes compositions ou (c) mélange de caoutchoucs diènes conjugués nitriles solides de différentes compositions, et (ii) a été sélectionné pour utilisation en évaluant le contenu nitrile et la plage de températures $\Delta$Tg dans laquelle la chaleur spécifique change rapidement, par comparaison avec des températures hors de cette plage où elle est à peu près constante, et en utilisant ces caoutchoucs diènes conjugués nitriles où $\Delta$Tg est de 58°C ou plus et le contenu nitrile moyen est de 15% à 50% en poids.

2. Composition de caoutchouc selon la revendication 1, dans laquelle le caoutchouc diène conjugué nitrile non saturé (A) est un copolymère d'acrylnitrile ou méthacrylnitrile et de butadiène ou isoprène.

3. Composition de caoutchouc selon la revendication 1 ou 2, dans laquelle $\Delta$Tg va de 60° à 90°C.

4. Composition de caoutchouc selon l'une quelconque des revendications 1 à 3, dans laquelle la probabilité, calculée à partir de la chaleur spécifique, de la présence dans le caoutchouc diène conjugué nitrile non saturé (A) de composants présentant une $\Delta$Tg inférieure ou égale à −73°C est d'au moins 5%.

5. Composition de caoutchouc selon l'une quelconque des revendications 1 à 4, dans laquelle le polymère styrène est un polystyrène, un copolymère en masse de styrène-butadiène-styrène, une résine d'acrylnitrile-styrène, une résine d'acrylnitrile-butadiène-styrène, une résine de styrène-butadiène-styrène, un copolymère en masse de styrène-isoprène-styrène ou un produit hydrogéné de celui-ci.

6. Composition de caoutchouc selon l'une quelconque des revendications 1 à 4, dans laquelle le polymère styrène est une résine de styrène-caoutchouc copolymère d'acrylnitrile-éthylène-butadiène, un copolymère en masse de styrène-butadiène-styrène ou un produit hydrogéné de celui-ci.

7. Composition de caoutchouc selon l'une quelconque des revendications 1 à 6, dans laquelle le polyalcénamère est un *trans*-1,5-polypentènamère ou un *trans*-polyoctènamère.

8. Composition de caoutchouc selon l'une quelconque des revendications 1 à 7, dans laquelle la quantité du composant (C) est comprise entre 0 et 20 parties en poids par 100 parties en poids du total des composants (A) et (B).

9. Composition de caoutchouc selon la revendication 8, dans laquelle la quantité du composant (C) est comprise entre 5 et 20 parties en poids par 100 parties en poids du total des composants (A) et (B).

10. Composition de caoutchouc selon l'une quelconque des revendications 1 à 9, dans laquelle le caoutchouc copolymère d'éthylène-propylène du composant (B) est un caoutchouc diène non conjugué d'éthylène-propylène où le diène non conjugué est au moins un éthylidènenorbornène, cyclopentadiène, 1,4-hexadiène, méthylènenorbornène et 4,7,8,9-tétrahydroindène.

# F I G. 1

# F I G. 2

1

FIG. 3(a)

FIG. 3(b)

FIG. 4

FIG. 5

FIG. 6

FIG. 7